(19) Europäisches Patentamt
European Patent Office
Office européen des brevets

(11) **EP 4 545 960 A1**

(12) **EUROPEAN PATENT APPLICATION**

(43) Date of publication:
**30.04.2025 Bulletin 2025/18**

(21) Application number: **24209034.8**

(22) Date of filing: **25.10.2024**

(51) International Patent Classification (IPC):
*G01N 29/024* (2006.01)

(52) Cooperative Patent Classification (CPC):
**G01N 29/024;** G01N 2291/021; G01N 2291/02809;
G01N 2291/02845; G01N 2291/02881

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 US 202363593751 P**

(71) Applicant: **Sensata Technologies, Inc.**
**Attleboro, MA 02703 (US)**

(72) Inventors:
- **WU, Huiston**
  **Canton, MA 02021 (US)**
- **FALCO, Michael**
  **Pascoag, RI 02859 (US)**

(74) Representative: **Flügel Preissner Schober Seidel**
**Patentanwälte PartG mbB**
**Nymphenburger Straße 20**
**80335 München (DE)**

(54) **GAS DETECTION USING ACOUSTIC SENSORS**

(57) A gas concentration determination system includes an acoustic sensor generating acoustic sensor data and a humidity sensor generating relative humidity data. A modified relative humidity is determined based at least in part on the acoustic sensor data and the relative humidity data. A gas concentration is determined using the modified relative humidity and the acoustic data. Using the modified relative humidity instead of the relative humidity data may reduce false positives in detecting gas leaks in HVAC systems, for example.

FIG. 3

EP 4 545 960 A1

**Description**

## CROSS-REFERENCE TO RELATED APPLICTATIONS

This application claims the benefit of priority of US Provisional Patent Application No. 63/593,751, filed October 27, 2024, titled "Gas Detection Using Acoustic Sensors," the entirety of which is hereby incorporated by reference.

## FIELD OF THE TECHNOLOGY

The subject disclosure relates to sensing systems, and more particularly to improved systems for determining relative humidity using a speed of sound sensing element.

## BACKGROUND OF TECHNOLOGY

HVAC systems have recently begun using more environmentally-friendly refrigerants. These refrigerants are better for the environment, but can still have adverse effects if not handled properly. For example, some refrigerants may be highly flammable. Accordingly, detecting and/or mitigating leaks in HVAC systems using these and/or other refrigerants may be important.

## BRIEF DESCRIPTION OF THE DRAWINGS

So that those having ordinary skill in the art to which the disclosed systems and techniques pertain will more readily understand how to make and use the same, reference may be had to the following drawings.

FIG. 1 is a schematic representation of a gas detection and mitigation system, according to aspects of this disclosure.

FIG. 2 is a flowchart illustrating line graph showing relative humidity values obtained using two techniques, in accordance with aspects of this disclosure.

FIG. 3 is a flowchart illustrating an example process for detecting gas concentration in a gas sample, in accordance with aspects of this disclosure.

## DETAILED DESCRIPTION

The subject technology overcomes prior art problems associated with relative humidity sensing elements and gas detection systems using such elements. For example, systems and techniques described herein may provide improved sensing elements and systems usable with myriad different systems, including many different heating, ventilation, and cooling (HVAC) systems. For example, the technology described herein provides a sensing system that may minimize false relative humidity readings, especially during rapid humidity changes. For example, the sensing systems described herein may reduce false positives. The advantages, and other features of the systems and methods disclosed herein, will become more readily apparent to those having ordinary skill in the art from the following detailed description of certain preferred embodiments taken in conjunction with the drawings which set forth representative examples of the present disclosure.

Some conventional gas detection sensors include a speed of sound (SOS) sensing element, e.g., an acoustic sensor, to measure the SOS of a gas sample in a sensing resonant cavity. The measurement may be used with inputs of temperature and humidity sensors (which measure variables temperature and humidity, respectively) to indicate the concentration of gas (as the unknown variable) within the gas sensing resonant cavity. In some examples, RH measurement, temperature measurement, and SOS measurement may be input into a second order polynomial model to calculate the corresponding gas concentration.

In some aspects of this disclosure, improved techniques may be used to detect a RH of a target gas (such as a coolant, refrigerant, or the like) using an SOS sensing element. Some example techniques according to this disclosure can include fixing a known gas concentration to that of plain air. The sensing signal may provide a fast response RH sensor that does not rely on absorption / desorption properties of bulk materials used in typical RH sensing. Due to the relationship of SOS v. RH, sensors according to this disclosure may be particularly effective in elevated temperatures and/or relatively high humidity ranges where conventional RH sensors may lose measurement capability.

Aspects of this disclosure can also include altering the inputs of an onboard RH sensor, or example with the use of a dynamic deterministic algorithm. For example, the algorithm may use sensor inputs such as the measured RH, measured temperature levels, a rate of change of a measured natural frequency of the SOS sense element, and/or the rate of change of the standard RH sensor, in order to determine or identify a rapid RH transition. In examples, the algorithm may calculate an RH value based on the measured SOS (e.g., an RH calculated value) and may correspondingly modify the measured RH value from the RH sensor (e.g., as an RH measured value). In some examples, to reduce overcompensation, the RH measured value and the RH calculated value may be combined, e.g., using a weighted average. In examples, the weighted average may be based at least in part on, e.g., proportional to, a rate of change of the RH measured value at the RH sensor.

In some aspects of this disclosure, the improved techniques described herein can allow for an SOS-based gas sensor to appropriately respond to situations of rapid humidity change by not causing a false reading. For example, such a false reading can be caused by a mismatch in time constants between the SOS signal and the RH sensor.

As a result of the improved RH sensors disclosed herein, false positives associated with rapid changes in relative humidity may be reduced, thereby reducing, or obviating, the need for inspection and repair of non-events. These and other features and benefits of this disclosure will be discussed with reference to the Figures.

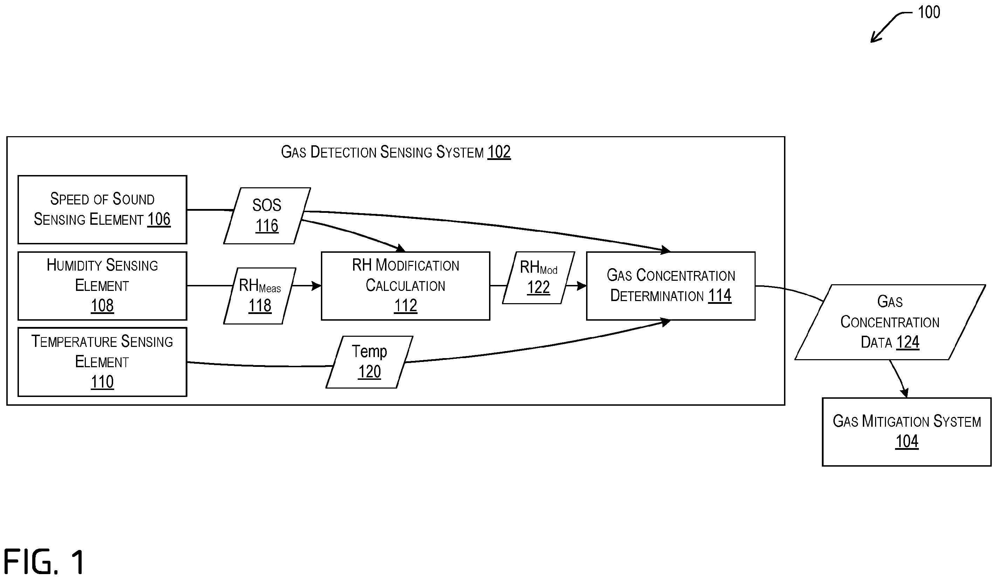

FIG. 1 is a schematic representation of a gas detection and mitigation system 100. In examples, the gas detection and mitigation system 100 generally includes a gas detection sensing system 102 and a gas mitigation system 104. In some examples, the gas detection and mitigation system 100 may be used in connection with a heating, ventilation, and air conditioning (HVAC) system. Without limitation, the HVAC system with which the gas detection and mitigation system 100 may be used can be a vehicle HVAC system, a commercial HVAC system, a residential HVAC system, and/or any other HVAC system that uses a refrigerant or other material that may be detected in accordance with the systems and techniques described herein. In some examples, refrigerants used in HVAC systems may be harmful, flammable, and/or otherwise unsafe. Accordingly, systems like the gas detection and mitigation system 100 may be used to mitigate any such unsafe conditions associated with malfunctioning, faulty, damaged, or otherwise unsatisfactory HVAC systems.

Generally, the gas detection sensing system 102 may be configured to detect presence of and/or an amount of a gas, refrigerant, and/or other substance in the HVAC system. In some examples, the gas detection sensing system 102 can be configured to determine presence of a refrigerant, e.g., leaked from a closed HVAC system. The gas detection sensing system 102 can also include functionality to generate and/or transmit a signal, command, or the like associated with an event, based on the detection.

The gas mitigation system 104 may be configured to receive the signal/command from the gas detection sensing system 102 and take some action to mitigate the event signaled by the gas detection sensing system 102. Without limitation, the gas mitigation system 104 can comprise a fan or other device that increases air or other fluid circulation around the gas detection sensing system 102, e.g., to disperse the leaking refrigerant or other gas. In other examples, the gas mitigation system can include functionality to generate, transmit, and/or output an alert associated with the presence of the gas. For example, the gas mitigation system 104 can include an audible alert and/or a visual alert proximate the gas detection and mitigation system. In other examples, the gas mitigation system can generate and transmit an alert, e.g., via a wireless protocol, to a computing device associated with the HVAC system. For example, the alert may be transmitted to a computing device associated with a technician, a manufacturer, an installer, a homeowner, a vehicle owner, and/or some other person or computing system.

As illustrated in FIG. 1, the gas detection sensing system 102 includes a speed of sound sensing element 106, a humidity sensing element 108, a temperature sensing element 110, an RH modification calculation component 112, and/or a gas concentration determination component 114. Although the various sensing elements and components are shown schematically as being separate, but related components, the arrangement of FIG. 1 is for example only. For example, and without limitation, the RH modification calculation component 112 and the gas concentration determination component 114 may be formed as a single unit and/or the functionality of these components may be performed by a single processor or other computing device. FIG. 1 is a schematic representation intended only to show an example configuration, generally arranged for ease of explanation.

The speed of sound (SOS) sensing element 106 may be configured to measure or determine the SOS of a gas sample in a sensing resonant cavity. For example, the SOS sensing element 106 may determine presence of a gas (e.g., refrigerant) based on a change in the SOS measurement in the cavity. As illustrated in FIG. 1, the SOS sensing element 106 generates SOS data 116. The SOS data 116 may be SOS measurements generated during use of the gas detection and mitigation system 100, a frequency signal associated with an oscillation of the SOS sensing element 106, acoustic sensor data, and/or other associated data and/or metadata. The SOS data 116 may be generated at a predetermined frequency or time constant, and the SOS data 116 can include associated timing data, e.g., as a timestamp or the like. In one example, the SOS sensor may be an acoustic sensor like those described in US Patent No. 9,869,659, issued January 16, 2018, and titled "Acoustic Sensor," which is hereby incorporated by reference in its entirety.

The humidity sensing element 108 may be configured to sense a humidity, e.g., a relative humidity, associated with an ambient environment. For example, the humidity sensing element 108 may be positioned and/or otherwise configured to determine a relative humidity of an environment in which the SOS sensing element 106 is disposed. As illustrated in FIG. 1, the humidity sensing element 108 generates measured RH data 118, e.g., illustrated as $RH_{meas}$. The measured RH data 118 may be a relative humidity generated at a predetermined frequency or time constant. In examples, a frequency or time constant associated with generation of the measured RH data 118 may be different from a frequency or time constant associated with generation of the SOS data 116, discussed above. In still further examples, the measured RH data 118 may be generated out of phase, e.g., at different times, than the SOS data 116. In examples, the humidity sensing element 108 may be an on-board Surface Mount Technology (SMT) RH sensor. Thus, for example, in some implementations of this disclosure, the SOS sensing element 106 and the humidity sensing element 108 may be disposed on a same substrate or board, e.g., a circuit board.

As illustrated in FIG. 1, the gas detection sensing system 102 can also include the temperature sensor 110. In examples, the temperature sensor 110 can be configured to output temperature data 120, which may include a temperature value associated with the environment in which the SOS sensing element 106 and/or the humidity sensing element 108 is/are disposed. In examples, and without limitation, the temperature sensor 110 can include a thermocouple, a thermistor, a resistance thermometer, a silicon bandgap temperature sensor, an infrared thermometer, or the like.

In some conventional gas detection systems, a presence/concentration of a gas (e.g., a refrigerant) can be determined using the SOS data 116, the RH data 118, and/or the temperature data 120. For example, a conventional technique can include inputting the SOS data 116, the RH data 118, and the temperature data 120 into a second order polynomial model to calculate the corresponding gas concentration. However, some implementations of this conventional processing may result in false positives, e.g., erroneous "detections" of the refrigerant. Such false positives may result from a mismatch of time constants associated with the SOS data 116 and the RH data 118. For example, when the relative humidity in an HVAC system drops quickly, e.g., when the HVAC system is powered on in hot and/or humid conditions, conventional systems may erroneously "detect" a refrigerant leak, for instance because the RH data 118 lags relative to the SOS data 116 and/or vice versa. This false reading may result in unnecessary mitigation efforts, including but not limited to alarms, alerts, maintenance, system shutdown, and/or the like.

In aspects of this disclosure, the RH modification calculation component 112 determines and/or generates modified RH data 122. For example, and as illustrated in FIG. 1, the RH modification calculation component 112 is configured to receive the SOS data 116 and the measured RH data 118 and output the modified RH data 122. In examples, the RH modification calculation component 112 can include processing, e.g., comprising an algorithm or the like, to modify the measured RH data 118 based at least in part on the SOS data 116. Without limitation, the RH modification calculation component 112 can calculate an RH value based on the SOS data 116, e.g., through a gas sample, and a relationship of relative humidity to molar mass. The calculated RH may be used to determine a modified RH, e.g., based on both the RH data 118 and calculated RH data determined based on the SOS data 116. This modification may correct for a mismatch in time constants between the SOS sensing element 106 and the humidity sensing element 108.

In some examples, the RH modification calculation component 112 can comprise a dynamic deterministic algorithm to generate the modified RH data 122. For instance, the RH modification calculation component can determine the modified RH data 122 based at least in part on the measured RH data 118, the temperature data 120 (which can optionally be received from the temperature sensing element 110), a rate of change of the measured natural frequency of the SOS sense element (e.g., from the SOS data 116), and/or a rate of change of the measured RH data 118. For instance, this data may be used to determine a rapid RH transition. The RH modification calculation component 112 can calculate an RH value based on the measured SOS, and appropriately modify the measured RH data based on the calculated RH value. In some examples, e.g., to reduce overcompensation, the RH measured value, e.g., from the measured RH data 118 and the RH calculated by the RH modification calculation component 112 based on the measured SOS may be combined as the modified RH data 122. For example, the modified RH data 122 may include a weighted average of the measured and calculated RH values. For example, the weighted average may be proportional to, or otherwise based at least in part on, the rate of change of the humidity sensing element 108. In some examples, the modified RH data 122 can match the time constant of the humidity sensor to the frequency output of the sense element to avoid false increases in gas concentration reading(s) caused by rapid decreases in RH as seen in some HVAC applications, as detailed herein. In some examples, the RH modification calculation component 112 can include implementation of an algorithm that uses the speed of sound value to calculate an RH, combined with deterministic limits for use, to allow the sensor to avoid false positive readings.

The gas concentration determination component 114 may include functionality to determine whether (and/or how much) gas is present in an environment of the gas detection sensing system 102. In the example of FIG. 1, the gas concentration determination component 114 can receive the SOS data 116, the modified RH data 122, and the temperature data 120. For instance, the gas concentration determination component 114 can include functionality to implement one or more models, such as a second order polynomial model, to determine gas concentration data 124. For example, the gas concentration data 124 may be a binary determination (e.g., gas present/gas not present). In other examples, the gas concentration data can include quantitative data, e.g., a percentage of the gas, a measured quantity of the gas, or the like.

Without limitation, the gas concentration determination component 114 can be configured to determine the gas concentration using one or more equations. For example, the speed of sound in a gas can represented by Equation 1:

$$v = \sqrt{\frac{RT}{M}}. \hspace{3cm} \text{(Eqn. 1)}$$

where v is the speed of sound (e.g., from the SOS data 116), R is a gas constant, T is the temperature (e.g., from the temperature data 120), and M is the molar mass of the gas. Also in examples, M, the molar mass of the gas, may be represented by Equation 2:

$$M = f(T, P, \rho) \hspace{3cm} \text{(Eqn. 2)}$$

where is the density of the gas. Thus, given the speed of sound through a gas sample, e.g., from the SOS data 116, and a relationship of relative humidity to molar mass, RH can be determined. As noted above, this calculated or determined RH may be used to modify the RH data 118 from the humidity sensing element 108. A more accurate determination of a gas concentration may then be determined using the modified RH data 122.

In FIG. 1, the gas concentration data 124 is transmitted to the gas mitigation system. In some examples, the gas mitigation system 104 can include functionality to determine, based on gas concentration data 124, whether action should be taken and/or what action to take to mitigate a potential condition. In other examples, the gas detection sensing system 102 can include functionality to receive and analyze the gas concentration data 124. In these examples, the gas detection sensing system 102 can further include functionality to generate and/or transmit an alert, instructions, commands, and/or or the like to cause the gas mitigation system 104 to take some action.

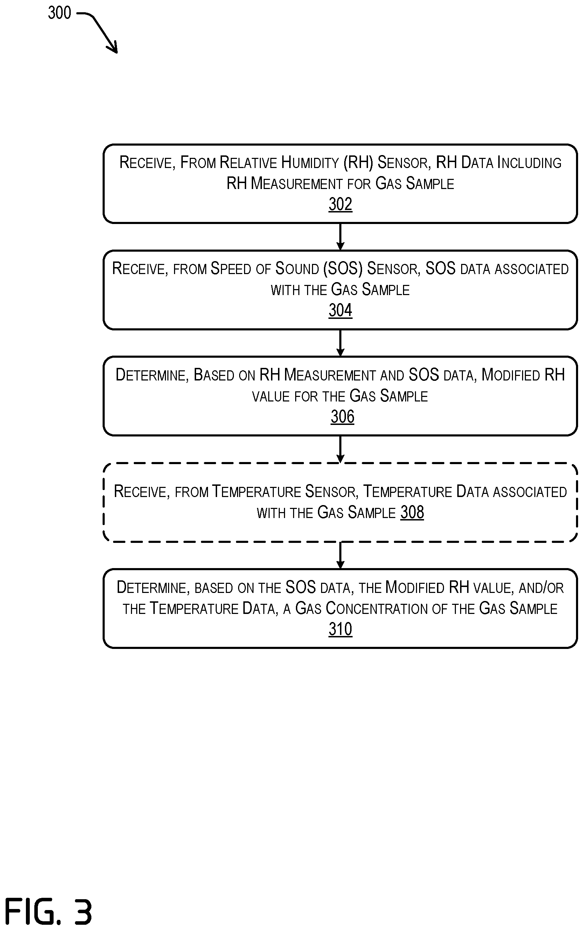

In examples, various of the illustrated blocks and/or other aspects of the systems and components described and detailed herein may be implemented in an intelligent hardware device, e.g., a central processing unit (CPU), a microcontroller, an application specific integrated circuit (ASIC), or may be implemented as part of a reconfigurable device. Aspects of the systems and components herein can include random access memory (RAM) and read-only memory (ROM) which may include instructions that are configured to, when executed (or when compiled and executed), cause aspects of the systems and/or components discussed herein to perform various functions described herein (including but not limited to the operations of the process illustrated in FIG. 3). Various components of the systems may be implemented using one or more separate CPUs or ASICs, for example. Moreover, the components may, individually or collectively, be implemented with one or more ASICs adapted to perform some or all of the applicable functions in hardware. Each of the noted components may be a means for performing one or more functions related to operation of the system.

In some examples of this disclosure, the gas detection sensing system 102 may be embodied as a single device, e.g., for placement directly in an environment to detect gas in that environment. For example, the gas detection sensing system 102 can include a housing that supports one or more of the operational components, such as the speed of sound sensing element 106, the humidity sensing element 108, the temperature sensing element 110, the RH modification calculation component 112 and/or the gas concentration determination component 114. Also in examples, the speed of sound sensing element 106, the humidity sensing element 108, the temperature sensing element 110, the RH modification calculation component 112, and/or the gas concentration determination component 114 may be disposed on and/or connected via one or more substrates, e.g., one or more circuit boards, or the like. For instance, and without limitation, the speed of sound sensing element 106, the humidity sensing element 108, and the temperature sensing element 110 may be mounted on a circuit board and the RH modification calculation component 112 and the gas concentration determination component 114 can be implemented by a processing component, e.g., an ASIC, an CPU, and/or the like.

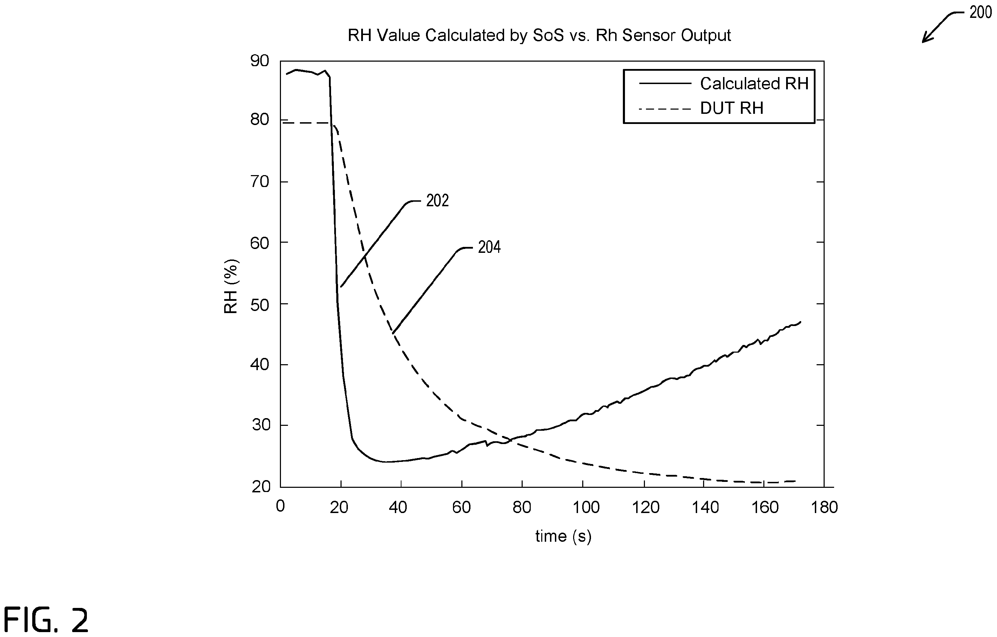

FIG. 2 is a line graph 200 showing relative humidity measurements over time. A first line 202 shows a relative humidity calculated using SOS data, as discussed herein. A second line 204 shows a relative humidity as measured by a sensor, such as the humidity sensing element 108. As illustrated, there is a variation between the relative humidity measurements. For example, the line 204 shows a lag in detecting the drop in RH using the sensor alone, relative to the value calculated using the SOS data.

The difference in calculated relative humidity and actual relative humidity can lead to variations when the relative humidity is used to determine gas concentration. More specifically, this disparity can lead to differently calculated gas concentration, which, in some instances, can be significant enough that an alarm is erroneously generated. For example, some applications, like air conditioning applications, may experience rapid changes in relative humidity. However, conventional RH sensors may be slow to detect this rapid change, and the gas concentration can thus be artificially inflated, causing a system to be tripped. As shown in FIG. 2, the line 204, which corresponds to the RH sensor measurement, is slower to detect the drop in relative humidity compared to the RH value calculated according to aspects of this disclosure, shown by the line 202.

FIG. 3 illustrates an example process 300 in accordance with aspects of the disclosure. The process is illustrated as logical flow graphs, with each operation representing a sequence of operations that can be implemented in software, hardware, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

The various illustrative operations, components, and systems described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, multiple microprocessors, one or more microprocessors in conjunction with a DSP core, or any other such configuration.

In more detail, FIG. 3 is a flowchart showing the example process 300, which is a process for determining a gas concentration of a gas sample. In examples, aspects of the process 300 can be performed by the gas detection sensing system 102 and/or the gas mitigation system 104, discussed above with reference to FIG. 1. However, the process 300 is not limited to being performed by the systems of FIG. 1, and the systems of FIG. 1 are not limited to performing the process 300.

At an operation 302, the process 300 includes receiving, from a relative humidity sensor, RH data including an RH measurement for the gas sample. In examples, the RH sensor may be an on-board humidity sensor.

At an operation 304, the process 300 includes receiving, from a speed of sound sensor, SOS data associated with the gas sample. The SOS sensor may be the SOS sensing element 106 discussed above.

At an operation 306, the process 300 includes determining, based on the RH measurement and the SOS data, a modified RH value for the gas sample. As discussed above, the time constants of the SOS sensing element 106 and the humidity sensing element 108 may be mismatched. The modified RH value can account for this mismatch. For instance, the modified RH value can be based at least in part on a calculated RH value that is determined based at least in part on the SOS value and by fixing a known gas concentration to that of plain air. In this way, a fast response RH measurement can be determined that does not rely on absorption/desorption properties of bulk materials. In examples, the operation 306 can be performed by the RH modification calculation component 112, discussed above.

In examples of this disclosure, the operation 306 may be performed in response to determining a relative humidity transition. As noted above, aspects of this disclosure may be particularly useful for compensating for rapid humidity transitions, such as in air conditioning systems in high temperature environments. As discussed above with reference to FIG. 2, conventional relative humidity sensors may be slow to detect humidity changes, which can result in improper gas concentration readings. Accordingly, the process 300 may include, e.g., as a part of the operation 306 or before the operation 306, determining that a rapid relative humidity change has occurred. For instance, the rapid change can be determined based at least in part on a rate of change of the measured natural frequency of the SOS sensor (the acoustic sensor) and/or the rate of change of the humidity sensing element.

At an operation 308, the process 300 includes optionally receiving, from a temperature sensor, temperature data associated with the gas sample. In examples, the temperature data may be received prior to the operation 306, and the modified RH value can be optionally determined based at least in part on the temperature data.

At an operation 310, the process 300 includes determining, based at on the SOS data, the modified RH value, and/or the temperature data, a gas concentration of the gas sample. For example, the operation 310 can be performed by the gas concentration determination component 114 detailed above.

As apparent from the foregoing, aspects of this disclosure also provide improved detection of unsafe gases and/or reduce a number of false positive detections of unsafe gases in HVAC systems and/or other refrigeration systems. For example, aspects of this disclosure can detect unsafe conditions, as in conventional systems, but also can reduce the number of inaccurate detections that may result from sudden changes in ambient conditions, such as temperature and/or humidity. Without limitation, sensors using the systems and techniques described herein may be used in many different environments and/or with many different systems. For example, the techniques and systems described herein may be used in commercial, residential, and/or other air conditioning systems. Moreover, the systems and techniques described herein may be used in commercial, residential, and/or other refrigeration systems. As detailed herein, aspects of this disclosure may be particularly useful at detecting gases used as refrigerants.

While the subject technology has been described with respect to preferred embodiments, those skilled in the art will readily appreciate that various changes and/or modifications can be made to the subject technology without departing from the spirit or scope of the subject technology. For example, each claim may depend from any or all claims in a multiple dependent manner even though such has not been originally claimed.

# EP 4 545 960 A1

**Claims**

1. A method of determining a gas concentration, the method comprising:

   receiving, from a humidity sensor, a measured relative humidity of a gas sample;
   receiving, from an acoustic sensor, acoustic sensor data associated with the gas sample;
   determining, based at least in part on the acoustic sensor data, a calculated relative humidity of the gas sample; and
   determining, based at least in part on the measure relative humidity and the calculated relative humidity, a concentration of a gas in the gas sample.

2. The method of claim 1, wherein the determining the calculated relative humidity is based at least in part on a known concentration of the gas in ambient air.

3. The method of claim 1, further comprising:

   modifying, based at least in part on the calculated relative humidity, the measured relative humidity to determine a modified relative humidity,
   wherein the determining the gas concentration is based at least in part on the modified relative humidity.

4. The method of claim 3, further comprising:
   determining a relative humidity transition, wherein the modifying the measured relative humidity is based at least in part on the relative humidity transition.

5. The method of claim 4, wherein the acoustic sensor data is speed of sound data, the method further comprising:

   determining, based at least in part on the speed of sound data, a rate of change of a measured natural frequency of the speed of sound data; and
   determining the relative humidity transition based at least in part on the rate of change of the measured natural frequency.

6. The method of claim 4, further comprising:

   determining a rate of change of the measured relative humidity,
   determining the relative humidity transition based at least in part on the rate of change of the measured relative humidity.

7. The method of claim 3, wherein the determining the modified relative humidity comprises determining a weighted average based on the measured relative humidity and the calculated relative humidity.

8. The method of claim 7, wherein the weighted average is proportional to a rate of change of the measured relative humidity.

9. The method of claim 1, further comprising:

   receiving, from a temperature sensor, a temperature of the gas sample,
   wherein the determining the concentration of the gas in the gas sample is based at least in part on the temperature.

10. The method of claim 1, wherein the gas concentration is a concentration of a refrigerant.

11. A gas detection sensor comprising:

   a humidity sensor generating relative humidity data associated with a gas sample;
   an acoustic sensor configured to generate speed of sound data associated with the gas sample;
   a processor; and
   memory storing instructions executable by the processor to perform operations comprising:

receiving, from the humidity sensor, a measured relative humidity of the gas sample;

receiving, from the acoustic sensor, the speed of sound data associated with the gas sample;

determining, based at least in part on the speed of sound data, a calculated relative humidity of the gas sample; and

determining, based at least in part on the measure relative humidity and the calculated relative humidity, a concentration of a gas in the gas sample.

12. The gas detection sensor of claim 11, further comprising:

a gas mitigation system, the operations further comprising:

determining that the concentration of the gas equals or exceeds a threshold concentration of the gas; and

causing the gas mitigation system to take action to mitigate presence of the gas.

13. The gas detection sensor of claim 12, wherein the causing the gas mitigation system to take action comprises at least one of causing the gas mitigation system to emit an alert or increasing air circulation.

14. The gas detection sensor of claim 11, further comprising:

a temperature sensor configured to generate temperature data associated with the gas sample,

wherein the determining the concentration of the gas in the gas sample is based at least in part on the temperature data.

15. The gas detection sensor of claim 11, the operations further comprising:

modifying, based at least in part on the calculated relative humidity, the relative humidity data received from the humidity sensor to determine a modified relative humidity,

wherein the determining the gas concentration is based at least in part on the modified relative humidity.

16. The gas detection sensor of claim 15, the operations further comprising:

determining a relative humidity transition, wherein the modifying the measured relative humidity is based at least in part on the relative humidity transition.

17. The gas detection sensor of claim 16, the operation further comprising:

determining a rate of change of a measured natural frequency of the speed of sound data; and

determining the relative humidity transition based at least in part on the rate of change of the measured natural frequency.

18. The gas detection sensor of claim 16, further comprising:

determining a rate of change of the relative humidity data,

determining the relative humidity transition based at least in part on the rate of change of the relative humidity data.

19. The gas detection sensor of claim 16, wherein the determining the modified relative humidity comprises determining a weighted average based on the relative humidity data received from the humidity sensor and the calculated relative humidity.

20. The gas detection sensor of claim 19, wherein the weighted average is proportional to a rate of change of the relative humidity data received from the humidity sensor.

FIG. 1

EP 4 545 960 A1

RH Value Calculated by SoS vs. Rh Sensor Output

FIG. 2

300

RECEIVE, FROM RELATIVE HUMIDITY (RH) SENSOR, RH DATA INCLUDING
RH MEASUREMENT FOR GAS SAMPLE
302

RECEIVE, FROM SPEED OF SOUND (SOS) SENSOR, SOS DATA ASSOCIATED
WITH THE GAS SAMPLE
304

DETERMINE, BASED ON RH MEASUREMENT AND SOS DATA, MODIFIED RH
VALUE FOR THE GAS SAMPLE
306

RECEIVE, FROM TEMPERATURE SENSOR, TEMPERATURE DATA ASSOCIATED
WITH THE GAS SAMPLE 308

DETERMINE, BASED ON THE SOS DATA, THE MODIFIED RH VALUE, AND/OR
THE TEMPERATURE DATA, A GAS CONCENTRATION OF THE GAS SAMPLE
310

FIG. 3

Europäisches
Patentamt

European
Patent Office

Office européen
des brevets

# EUROPEAN SEARCH REPORT

**Application Number**

EP 24 20 9034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUKUOKA HIROAKI ET AL: "Measurement of oxygen concentration in atmospheric air using ultrasound time of flight with humidity compensation", REVIEW OF SCIENTIFIC INSTRUMENTS, AMERICAN INSTITUTE OF PHYSICS, 2 HUNTINGTON QUADRANGLE, MELVILLE, NY 11747, vol. 94, no. 3, 2 March 2023 (2023-03-02), XP012272828, ISSN: 0034-6748, DOI: 10.1063/5.0113877 [retrieved on 2023-03-02] * the whole document * | 1-20 | INV. G01N29/024 |
| Y | US 2017/197056 A1 (VAN SCHALKWYK ANDRE [NZ] ET AL) 13 July 2017 (2017-07-13) * abstract * * paragraphs [0045] - [0052] * | 1,11 | |
| Y | US 2018/095059 A1 (MCQUILLEN MICHAEL [US] ET AL) 5 April 2018 (2018-04-05) * abstract; figures 4-9 * * paragraphs [0097] - [0135] * | 1,11 | |
| | | | TECHNICAL FIELDS SEARCHED (IPC) G01N |

The present search report has been drawn up for all claims

| Place of search | Date of completion of the search | Examiner |
|---|---|---|
| Munich | 12 March 2025 | Uttenthaler, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9034

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2025

| Patent document cited in search report | Publication date | Patent family member(s) | | Publication date |
|---|---|---|---|---|
| US 2017197056 A1 | 13-07-2017 | AU | 2015268171 A1 | 15-12-2016 |
| | | AU | 2020201432 A1 | 19-03-2020 |
| | | AU | 2022202127 A1 | 14-04-2022 |
| | | CA | 2950073 A1 | 03-12-2015 |
| | | CN | 106535972 A | 22-03-2017 |
| | | CN | 110354356 A | 22-10-2019 |
| | | CN | 110393839 A | 01-11-2019 |
| | | CN | 115554543 A | 03-01-2023 |
| | | EP | 3148624 A1 | 05-04-2017 |
| | | EP | 4235120 A2 | 30-08-2023 |
| | | JP | 7330117 B2 | 21-08-2023 |
| | | JP | 2017517319 A | 29-06-2017 |
| | | JP | 2020096914 A | 25-06-2020 |
| | | JP | 2022091902 A | 21-06-2022 |
| | | JP | 2024023533 A | 21-02-2024 |
| | | SG | 10201810281T A | 28-12-2018 |
| | | SG | 11201609863W A | 29-12-2016 |
| | | US | 2017197056 A1 | 13-07-2017 |
| | | US | 2023026603 A1 | 26-01-2023 |
| | | WO | 2015183107 A1 | 03-12-2015 |
| US 2018095059 A1 | 05-04-2018 | CN | 107917007 A | 17-04-2018 |
| | | DE | 102017122907 A1 | 17-05-2018 |
| | | RU | 2017132701 A | 19-03-2019 |
| | | US | 2018095059 A1 | 05-04-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63593751
- US 9869659 B